# EUROPÄISCHE PATENTANMELDUNG

(11) **EP 0 823 560 A1**
(43) Veröffentlichungstag der Anmeldung: **11.02.1998**
(21) Anmeldenummer: 97111611.6
(22) Anmeldetag: 09.07.1997
(51) Int. Cl.: F15B 15/28, G01D 5/22

(54) **Wegsensor**

(30) Priorität: 09.08.1996 DE 19632211
(71) Anmelder: ROBERT BOSCH GMBH, 70442 Stuttgart (DE)
(72) Erfinder: Thierbach, Peter, 71634 Ludwigsburg (DE)

(57) **Zusammenfassung**

Die Erfindung betrifft einen Wegsensor, mit einem hohlzylindrischen Spulensysytem (4;10,11,12) in das im Bereich der Zylinderachse ein magnetisch leitender Stab (14) als Weggeber axial eintauchbar ist. Der magnetisch leitende Stab (14) ist an einem Schieber oder Steuerkolben (5;6) einer hydraulischen Stellvorrichtung (2) befestigt, der eine, einen äußeren Hohlzylinder (7) bildende Ausnehmung aufweist, welche das hohlzylindrische Spulensystem (4;10,11,12) in einem vorgegebenen Abstand parallel zur Lage des magnetisch leitenden Stabes (14) umschließt.

## Beschreibung

### Stand der Technik

Die Erfindung betrifft einen Wegsensor, insbesondere für eine Hydraulikeinheit in einem Fahrzeug, nach dem Oberbegriff des Hauptanspruchs.

Bei einem aus der DE-OS 37 30 926.9 bekannten Wegsensor wird die Bewegung des Kolbens eines Zylinders, beispielsweise in der Steuereinrichtung für eine Hinterradlenkung eines Kraftfahrzeugs, erfaßt. Der Kolben weist hier eine Doppelfunktion auf, er dient sowohl zur Kraftübertragung als auch als Geber für den Wegsensor. Eine Verlängerung des Kolbens aus magnetisierbarem Material ragt hierzu in ein Zylinderrohr mit außen aufgewickelten Spulen und führt durch eine Bewegung zu einer induktiven Beeinflussung des Spulenstroms, der meßtechnisch ausgewertet werden kann. Der geometrische Aufbau der beweglichen und unbeweglichen Teile dieser Anordnung und die optimale Anordnung der Spulen stellt für viele Anwendungsfälle eine kritische Größe dar.

### Vorteile der Erfindung

Der Wegsensor der eingangs beschriebenen Art ist in der erfindungsgemäßen Weiterbildung mit den kennzeichnenden Merkmalen des Anspruchs 1 dadurch vorteilhaft, daß die Gesamtlänge der Baueinheit mit dem Wegsensor und insbesondere einer hydraulischen Stellvorrichtung deutlich reduziert werden kann, da das Spulensystem vollständig im Schieber oder Steuerkolben des Hydrauliksystems mitsamt dem magnetisch leitenden Stab eintaucht. Der Schieber oder Steuerkolben des Hydrauliksystems weist hierzu nur eine hohlzylindrische Ausnehmung auf, die im eingeschobenen Zustand als äußerer Hohlzylinder das Spulensystem umschließt.

Um einen eventuellen Einfluß des weiteren Hohlzylinders auf das Magnetfeld der Spulen auszuschließen, kann auch ein Abschirmblech das Spulensystem umschließen.

Gemäß einer Ausführungsform des Wegsensors kann das Spulensystem nach dem Transformatorprinzip aufgebaut sein und, wie es für sich gesehen aus der DE-OS 37 30 926.9 bekannt ist, aus einer Primärspule und jeweils seitlich daneben angeordneten Sekundärspulen bestehen, wobei die induktive Kopplung durch den beweglichen Stab beeinflußt wird. In vorteilhafter Weise werden gemäß der erfindungsgemäßen Ausführungsform die Sekundärspulen ohne Unterbrechung hintereinander gewickelt, wobei beim Beginn des Wickelns der zweiten Sekundärspule der Wickelsinn umgekehrt wird. Hierdurch kann der Aufbau eines Differentialtransformators auf einfache Weise realisiert werden, der beim Stand der Technik mit in Reihe geschalteten Spulen nur durch eine gegensinnige äußere Beschaltung der Spulen geschaffen werden kann. Zur Auswertung steht gemäß der Erfindung sofort die Differenz der Spulensignale zur Verfügung.

### Zeichnung

Ein Ausführungsbeispiel eines erfindungsgemäßen Wegsensors wird anhand der Zeichnung erläutert. Es zeigen:
Figur 1 eine hydraulische Stelleinheit mit einer Stellvorrichtung und einem Wegsensor und
Figur 2 einen detaillierten Schnitt durch den Wegsensor.

### Beschreibung des Ausführungsbeispiels

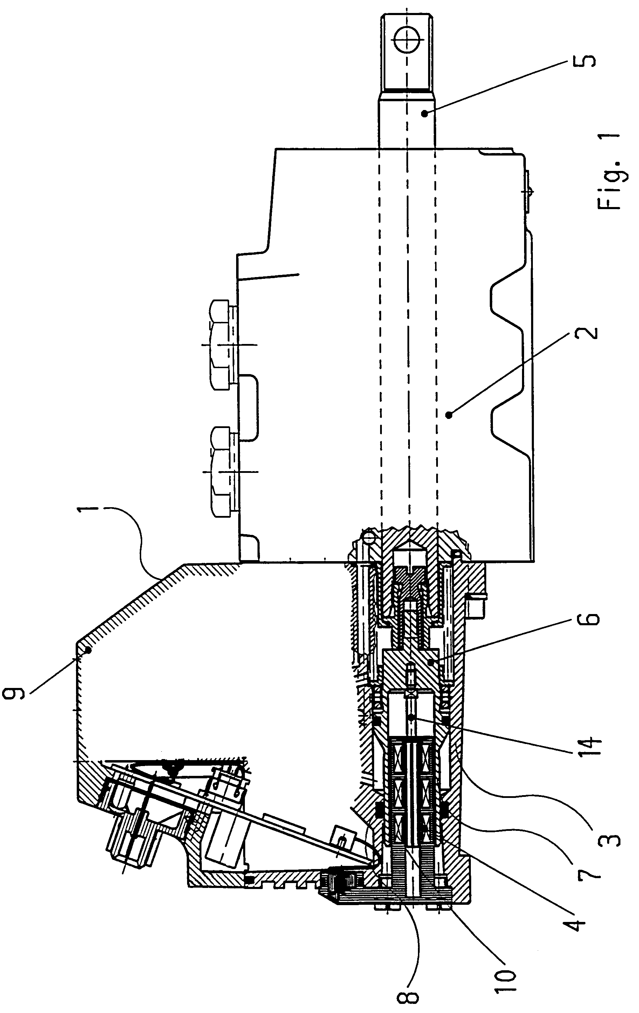

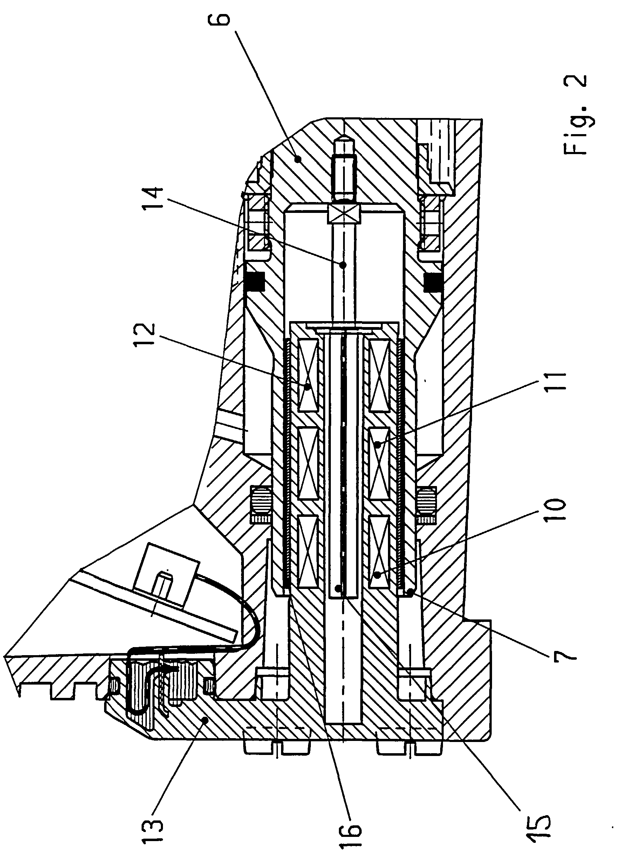

In Figur 1 der Zeichnung ist eine hydraulische Stelleinheit 1 mit einer Stellvorrichtung 2 und einem in ein Hydrauliksystem 3 integrierten Wegsensor 4 gezeigt. Die Stellvorrichtung 2 weist einen Schieber 5 auf, der im Hydraulikteil 3 mit einem Steuerkolben 6 verbunden ist. Der Steuerkolben 6 weist einen Hohlzylinder 7 auf, der über Dichtungen 8 verschiebbar im Gehäuse 9 der Stelleinheit 1 geführt ist. Im Inneren des Hohlzylinders 7 befinden sich Spulen 10, 11 und 12 des Wegsensors 4, die anhand von Figur 2 näher erläutert werden.

Die Figur 2 zeigt die Spulen 10, 11 und 12, die in einen hohlzylindrischen Spulenträger 13 und damit fest am Gehäuse 9 integriert sind. Am Steuerkolben 6 ist zentral in der den Hohlzylinder 7 bildenden Ausnehmung ein Stab 14 angeordnet, der einen magnetisch leitenden Kern 15 aufweist. Der Stab 14 wird mit einer Bewegung des Steuerkolbens 6 in das Innere der Spulen 10, 11 und 12 geführt. Eine derart verschiebbare Lage des Stabes 14 verändert das Magnetfeld der Spulen 10, 11 und 12 in einer Weise, daß die daraus resultierende Beeinflussung des Spulenstroms meßbar ist und zur Erzeugung eines Stellsignals herangezogen werden kann. Zur besseren Abschirmung sind die Spulen 10, 11 und 12 beim Ausführungsbeispiel mit einem Abschirmblech 16 umgeben.

Die Spule 10 ist hierbei als Primärspule und die Spulen 10 und 12 sind als Sekundärspulen ausgebildet, so daß sich ein Differentialtransformator ergibt, wie er im Stand der Technik (DE-OS 37 30 926.9) beschrieben ist. Ein einfacher und kompakter Aufbau des Wegsensors 4 läßt sich dabei durch eine unterbrechungslose Wicklung der Sekundärspulen 10 und 12 mit einer Umkehr des Wickelsinns erreichen, so daß eine nachgeschaltete Auswertelektronik 15 einfach aufgebaut werden kann, da bereits ein Differenzsignal der Sekundärspulen 10 und 12 vorliegt.

## Patentansprüche

1. Wegsensor, mit
- einem hohlzylindrischen Spulensysytem (4;10,11,12) in das im Bereich der Zylinderachse ein magnetisch leitender Stab (14) als Weggeber axial eintauchbar ist, **dadurch gekennzeichnet, daß**
- der magnetisch leitende Stab (14) an einem Schieber oder Steuerkolben (5;6) einer hydraulischen Stellvorrichtung (2) befestigt ist, der eine, einen äußeren Hohlzylinder (7) bildende Ausnehmung aufweist, welche das hohlzylindrische Spulensystem (4;10,11,12) in einem vorgegebenen Abstand parallel zur Lage des magnetisch leitenden Stabes (14) umschließt.

2. Wegsensor nach Anspruch 1, **dadurch gekennzeichnet, daß**
- das Spulensystem (4;10,11,12) fest in einem Gehäuse (9) für den Wegsensor (4), eine zugehörige elektronische Auswerteeineheit (15) und eine Stellvorrichtung (2) für den beweglichen Schieber oder Steuerkolben (4;5) verankert ist.

3. Wegsensor nach Anspruch 1 oder 2, **dadurch gekennzeichnet**, **daß**
- um das Spulensystem (4;10,11,12) im Bereich des äußeren Hohlzylinders (7) ein Abschirmblech (16) angeordnet ist, wobei ein Luftspalt zwischen dem Abschirmblech (16) und dem Hohlzylinder (7) erhalten bleibt.

4. Wegsensor nach einem der Ansprüche 1 bis 3 mit
- einer Primärspule (11) und zwei axial jeweils vor und hinter der Primärspule (11) angeordneten Sekundärspulen (10,12) auf einem mit Stegen zur Trennung der Spulen versehenen Spulenkörper, **dadurch gekennzeichnet, daß**
- die Sekundärspulen (11,12) in Reihe geschaltet und fortlaufend mit einem Spulendraht gewickelt sind, wobei sie einen gegenläufigen Wickelsinn aufweisen.

5. Verfahren zur Herstellung eines Wegsensors nach Anspruch 4, **dadurch gekennzeichnet, daß**
- in einem ersten Verfahrensschritt die erste Sekundärspule (12) von einem ersten Anschlußpunkt aus gewickelt wird,
- in einem zweiten Verfahrensschritt die zweite Sekundärspule (10) gegenläufig zur ersten gewickelt wird und zu einem zweiten Anschlußpunkt geführt wird und
- in einem dritten Verfahrensschritt die Primärspule (11) von einem dritten zu einem vierten Anschlußpunkt gegenläufig zu jeweils einer der Sekundärspulen (10,12) gewickelt wird.
